# FASCICULE DE BREVET EUROPEEN

(11) **EP 3 272 507 B1**
(45) Date de publication et mention de la délivrance du brevet: **24.02.2021**
(21) Numéro de dépôt: 17181992.3
(22) Date de dépôt: 18.07.2017
(51) Int. Cl.: B29C 70/52, B29C 70/84, B29L 31/00, B29K 101/12

(54) **PROCÉDÉ D'OBTENTION D'UNE PIÈCE PROFILÉE COURBE EN MATIÈRE COMPOSITE ET/OU SYNTHÉTIQUE, ET DISPOSITIF DE MISE EN OEUVRE DE CE PROCÉDÉ**
HERSTELLUNGSVERFAHREN EINES GEKRÜMMTEN PROFILTEILS AUS VERBUNDSTOFF UND/ODER SYNTHETISCHEM MATERIAL, UND VORRICHTUNG ZUR UMSETZUNG DIESES VERFAHRENS
METHOD FOR OBTAINING A CURVED PROFILED PART MADE OF COMPOSITE AND/OR SYNTHETIC MATERIAL, AND DEVICE FOR CARRYING OUT SAID METHOD

(30) Priorité: 18.07.2016 FR 1656847
(43) Date de publication de la demande: 24.01.2018
(73) Titulaire: CQFD Composites, 68270 Wittenheim (FR)
(72) Inventeur: Chauzu, Frank, 68170 RIXHEIM (FR)
(74) Mandataire: Brungard, Yves Francois

(56) Documents cités:
- FR-A1- 2 504 449
- FR-A1- 3 006 233
- US-A1- 2015 129 116

## Description

La présente invention concerne un procédé d'obtention d'une pièce profilée courbe en matière composite et/ou synthétique, et un dispositif de mise en œuvre de ce procédé.

Cette pièce profilée courbe, également dénommée "positionneur" dans la description ci-après, est destinée à être utilisée comme structure de renforcement primaire dans une pièce structurelle courbe plus complexe.

Pour la fabrication de profilés droits en matériaux composites, la technique connue de pultrusion est largement utilisée. Elle permet en effet d'obtenir des profilés de sections constantes aux propriétés mécaniques élevées et de surcroit présentant un bon rapport performance/poids par rapport aux matériaux traditionnels. Il s'agit en pultrusion de tirer un faisceau de fibres unidirectionnelles et/ou multidirectionnelles au travers d'une unité d'injection d'une résine dans les fibres puis au travers d'une unité de solidification permettant de calibrer le profilé composite ainsi obtenu.

Néanmoins pour la fabrication de profilés courbes, la technique actuelle de pultrusion semble inadaptée car le tirage désaxé des fibres pendant la phase de courbure provoquent leur déplacement dans la filière et conduit rapidement à un "blocage" du procédé.

Par ailleurs, les profilés composites obtenus par pultrusion présentent d'excellentes propriétés dans le sens des fibres, c'est-à-dire dans le sens longitudinal de production mais de faibles propriétés mécaniques dans le sens transversal. Pour ce faire, en pultrusion "droite", il est possible de rajouter des tissus ou rubans qui apportent des fibres de renfort transverses pour palier à ce problème. Dans le cas d'une pultrusion courbure, il semble très difficile voire impossible d'incorporer un tissu initialement plat et de lui faire adopter la forme du profilé pendant la courbure ; des zones solidaires du tissus devant se déplacer à des vitesses différentes.

Le document FR 2504449 divulgue un procédé et un dispositif de pultrusion pour la fabrication de profilés courbes.

Le document FR 3006233 divulgue un procédé de fabrication de profilé en PVC, dans lequel des éléments de renfort pultrudés sont utilisés lors de l'extrusion du profilé.

L'invention a pour objectif de remédier à ces inconvénients.

A cet effet, l'invention concerne un procédé selon la revendication 1 et un dispositif slon la revendication 14.

Grâce à l'alimentation des éléments de renforts de façon indépendante les uns des autres, la vitesse linéaire d'alimentation d'un élément se trouvant du côté de l'intrados de la filière peut être inférieure à la vitesse linéaire d'alimentation d'un élément se trouvant du côté de l'extrados, ce qui permet que ces éléments de renfort se déplacent à des vitesses angulaires sensiblement identiques à l'intérieur de la filière. Ladite matière d'enrobage thermoplastique chargée ou non en fibres peut ainsi être extrudée ou co-extrudée sur eux pour constituer, après refroidissement, ledit "positionneur". Dans ce dernier, les éléments de renfort sont noyés dans ladite matière d'enrobage et, lorsque cette matière a durci, sont positionnés de façon fixe les uns par rapport aux autres au sein de ce positionneur. Ce dernier est apte à être placé de façon simple et rapide dans un moule d'injection et/ou compression en vue de la réalisation d'une pièce structurelle courbe de géométrie plus complexe.

Les éléments de renfort peuvent être de forme ronde, ovale, carré, plate ou de toute autre géométrie s'adaptant à la forme du profilé extrudé ou co-extrudé.

Les éléments de renfort ont une épaisseur telle que le ratio épaisseur sur rayon de courbure est compris entre 1/4000^{e} et 1/100^{e}, de préférence entre 1/2000^{e} et 1/250^{e}, encore plus préférentiellement entre 1/2000^{e} et 1/500^{e}. Les éléments de renfort ont ainsi encore suffisamment de souplesse pour fléchir et suivre la direction courbe imposée au profilé. La rigidité qui subsiste permet à l'élément de renfort de s'inscrire dans la courbure. La rigidité de l'élément de renfort est choisie en fonction de la courbure et contribue à maintenir la courbure sur quelques centimètres pendant que la matière extrudée se fige. Les éléments de renfort contribuent à la consistance de la portion sortie de l'extrudeuse avant le figeage de la matière extrudée. Le ratio épaisseur/rayon de courbure peut évoluer aussi en fonction de la rigidité des fibres, en particulier selon leur matériau constitutif. On choisira une plus forte épaisseur pour des fibres souples. L'épaisseur s'entend comme la plus faible dimension de la section de l'élément de renfort, comme par exemple le diamètre dans le cas d'un rond, la longueur de l'arête dans le cas d'un carré, le plus petit côté dans le cas d'une section rectangulaire.

Selon un perfectionnement, on insère les éléments de renfort avec un écartement entre eux inférieur à 5 fois l'épaisseur de ceux-ci, de préférence inférieur à 3 fois leur épaisseur, encore plus préférentiellement inférieur à 2 fois l'épaisseur. Non seulement on garantit ainsi une densité importante d'éléments de renfort, apte à conférer une rigidité importante au profilé, mais aussi on permet une extrusion plus facile dans la mesure où les éléments de renfort entraînent avec eux la matière extrudée entre eux. En limitant l'écartement des éléments de renfort, la répartition de ceux-ci est relativement homogène à travers la section du profilé, de manière à entraîner toute la matière extrudée. L'écartement s'entend comme la dimension l'espace dans lequel on peut passer un objet entre deux éléments de renfort.

Le positionneur peut, en ses zones dépourvues des éléments de renfort, avoir une épaisseur réduite au minimum, n'étant pas destiné à avoir de rôle structurel au niveau de ces zones ; c'est ladite matière injectée ultérieurement qui apportera une résistance transversale et/ou à la torsion à la pièce structurelle courbe obtenue.

Ce positionneur peut également être utilisé comme tel, c'est-à-dire comme un profilé plastique, possiblement renforcé localement par des éléments de renforts mais dont la rigidité est bien supérieure à celle que présenterait le même profilé sans renforts.

La filière d'extrusion ou de co-extrusion peut être courbe ou droite. L'unité de calibrage courbe peut être constituée par un outillage courbe directement positionné en aval de la filière de co-extrusion ; elle peut être d'un bloc ayant la forme courbe appropriée, ou peut également être formée d'une pluralité de tronçons de calibrage droites, de largeurs limitées, placées les unes par rapport aux autres selon la forme globale courbe appropriée.

Le procédé peut comprendre une étape consistant à tirer le positionneur par des moyens de tirage qui sont courbes et assurent simultanément la fonction de calibrage. Ces moyens de tirage peuvent par exemple être sous la forme bien connue de Caterpillar à patin de forme, c'est-à-dire un ensemble de deux bandes sans fin motorisées munies de patins de formes, entre lesquelles passe ce positionneur ; alternativement, ces moyens de tirage peuvent être des pinces actionnées selon un mode de va-et-vient alternatif connu sous le nom de pas de pèlerin. Dans ces cas, l'unité de tirage imprime au profilé une courbure égale ou proche de la courbure finale souhaitée.

Les éléments de renfort sont, à l'état non déformé, rectilignes, et donc sont légèrement contraints en flexion lorsqu'ils sont noyés dans ladite matière d'enrobage. Selon l'invention, ces éléments de renfort sont des éléments continus obtenus par pultrusion, c'est-à-dire obtenus par le procédé comprenant le fait de tirer un faisceau de fibres au travers d'une unité d'imprégnation d'une résine sur ces fibres puis au travers d'une unité de solidification de ce produit, par exemple une filière de pultrusion chauffée permettant la polymérisation dans le cas d'une résine réactive, ces éléments de renfort continus étant réalisés simultanément à l'étape d'extrusion ou de co-extrusion, par exemple par un procédé de pultrusion mis en œuvre en amont. De tels éléments de renfort obtenus par pultrusion ont une forte proportion de fibres, disposées longitudinalement, et sont donc bien adaptés au renforcement longitudinal d'une pièce structurelle courbe.

Ces éléments de renfort peuvent être produits en simultané par pultrusion puis co-extrudés dans la foulée. Les éléments de renfort peuvent alors être préférentiellement tirés chacun par un moyen de traction indépendant de manière à pouvoir ajuster pour chacun la vitesse de tirage à la vitesse de défilement de l' éléments de renfort, générée selon que l' éléments de renfort se trouve à l'intrados ou à l'extrados, et ce pour ne pas générer une tension excessive dans l'éléments de renfort.

Les éléments de renfort peuvent contenir uniquement des fibres longitudinales unidirectionnelles, c'est-à-dire positionnées dans le sens de la pultrusion. Ces éléments de renfort peuvent également contenir des fibres transversales, c'est-à-dire positionnées dans le sens perpendiculaire la pultrusion.

Lorsque de tels éléments de renfort continus sont utilisés, le procédé comprend une étape de coupe aux extrémités du positionneur obtenu.

De même, lorsque des éléments de renfort continus sont utilisés, présentant une souplesse longitudinale permettant leur enroulement sur des dérouleurs, l'alimentation des éléments de renfort peut se faire à partir des dérouleurs sur lesquels ces éléments ont été préalablement enroulé ; le déroulement peut être libre ; il peut également être motorisé de manière à obtenir des tensions dans les éléments de renfort parfaitement maitrisées quelque soit le niveau de dévidage des dérouleurs.

Alternativement, le procédé comprend l'étape consistant à réaliser ces éléments de renfort continus préalablement à l'étape d'extrusion ou de co-extrusion, par exemple par pultrusion. Les éléments de renfort peuvent alors préférentiellement être tirés chacun par un moyen de traction indépendant de manière à pouvoir ajuster pour chacun la vitesse de tirage linéaire à la vitesse de défilement linéaire du renfort générée selon que le renfort se trouve à l'intrados ou à l'extrados du positionneur, et ce pour ne pas générer une tension dans le renfort qui conduirait à modifier son positionnement dans la filière et/ou dans le calibreur courbe ; un élément de renfort sous tension excessive tend en effet à prendre le plus court chemin sans respecter la courbure initialement souhaitée.

L'alimentation des éléments de renfort peut se faire au travers d'un système de guidage de type plaque percée de trous ou lumières de défilement des éléments de renfort, permettant un positionnement de ces éléments de renfort les uns par rapport aux autres à l'entrée, ou en amont de l'entrée, de la filière d'extrusion ou de co-extrusion.

De préférence, le procédé comprend l'utilisation d'au moins un élément de renfort gainé par un matériau ayant une forte capacité d'adhérence à la fois aux fibres et/ou à la résine de liaison de ces fibres que comprend l'élément de renfort, et à ladite matière d'enrobage.

Cette gaine est notamment en une résine thermoplastique.

La matière d'enrobage utilisée lors de la co-extrusion ou extrusion peut contenir des fibres dont la longueur est supérieure à 0,5 mm, typiquement 5 mm, et préférentiellement supérieure à 10 mm.

Le dispositif de mise en œuvre de ce procédé comprend, selon l'invention les caractéristiques de la revendication 14.

Le dispositif peut également comprendre des moyens de tirage courbes, situés en aval de la sortie de la filière, permettant de tirer le positionneur obtenu selon un rayon de courbure proche du rayon de courbure souhaité.

Lorsque des éléments de renfort continus sont utilisés, le dispositif comprend des moyens de coupe de ces éléments et du positionneur, notamment sous la forme d'une lame de scie réalisant un sciage transversal à ce positionneur.

Dans un mode de réalisation non revendiqué, les moyens d'alimentation peuvent être sous la forme de dérouleurs sur lesquels les éléments de renfort sont enroulés.

Conformément à l'invention, les moyens d'alimentation sont constitués par un procédé de pultrusion situé en amont de la filière d'extrusion et permettant de produire et d'alimenter en continu les renforts.

L'invention sera bien comprise, et d'autres caractéristiques et avantages de celle-ci apparaîtront, en référence au dessin schématique annexé, lequel représente, à titre d'exemples non limitatifs, plusieurs formes de réalisation possibles du dispositif concerné.
La figure 1 est une vue très simplifiée, de côté, de ce dispositif, avec coupe partielle, selon une première forme de réalisation ;
les figures 2 à 5 sont des vues en section de différentes pièces courbes profilées, dites "positionneurs", obtenues au moyen de ce dispositif ; et
les figures 6 à 8 sont des vues très simplifiées, de côté, de ce dispositif, selon différentes autres formes de réalisation.

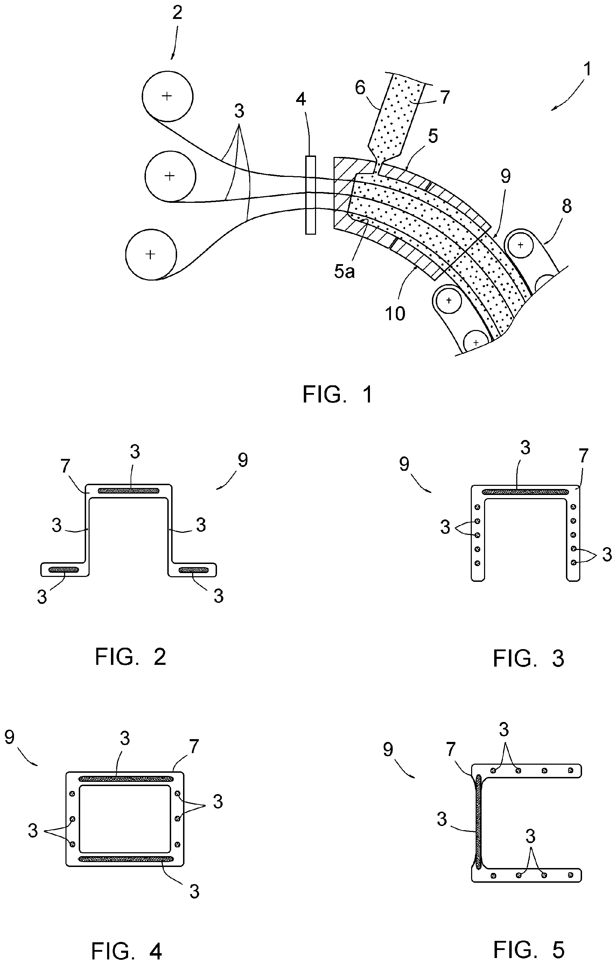

La figure 1 représente un dispositif 1 comprenant successivement :
   - un ensemble 2 de dérouleurs dévidant des éléments de renfort 3 ;
   - un système de guidage formé par une plaque 4 percée de trous ou lumières de défilement des éléments de renfort 3 au travers d'elle ;
   - un filière d'extrusion ou de co-extrusion 5, comprenant une chambre d'injection et d'enrobage 5a ;
   - un injecteur 6 d'une matière d'enrobage thermoplastique chargée ou non en fibres 7 dans la chambre 5a, de telle sorte que cette matière vienne remplir entièrement cette chambre au fur et à mesure de l'extrusion ou de la coextrusion réalisée par la filière 5, et noyer ainsi en continu les éléments de renfort 3 ;
   - une unité de calibrage 10 ;
   - une unité 8 de tirage courbe du profilé 9, ou "positionneur", obtenu, sous la forme de bandes sans fin motorisées entre lesquelles passe ce positionneur 9 en décrivant le rayon de courbure souhaité.

Le dispositif comprend également, en aval de l'unité 8, des moyens de coupe (non représentés) des éléments de renfort 3 et du positionneur 9, notamment sous la forme d'une lame de scie réalisant un sciage transversal à ce positionneur 9.

Chaque dérouleur 2 est propre à un élément de renfort 3 et permet d'alimenter cet élément de renfort de manière indépendante d'un élément de renfort 3 à un autre. Il peut être à dévidement libre ou à dévidement motorisé selon une vitesse de dévidement réglable.

Les éléments de renfort 3 sont des éléments continus obtenus par pultrusion, c'est-à-dire obtenus par le procédé comprenant le fait de tirer un faisceau de fibres au travers d'une unité d'application d'une résine sur ces fibres puis au travers d'une unité de polymérisation/solidification du profilé composite ainsi formé. Chaque élément 3 est gainé par une résine thermoplastique, une telle résine ayant une forte capacité d'adhérence aux fibres et à la résine de liaison de ces fibres, que comprend l'élément de renfort 3, et à ladite matière d'enrobage 7.

La plaque 4 du système de guidage permet un positionnement des éléments de renfort 3 les uns par rapport aux autres en amont de l'entrée de la filière 5. Elle précède la filière 5 sur une distance de guidage supérieure à 20 mm, typiquement de 50 mm et préférentiellement supérieure à 100 mm.

L'unité de calibrage courbe 10 permet quant à elle de calibrer ladite matière d'enrobage autour des éléments de renfort 3.

Les figures 2 à 4 montrent trois exemples de positionneurs 9 obtenus au moyen du dispositif 1. Chacun comprend des éléments de renforcement 3 plats et des éléments de renforcement 3 à section circulaire. Ces éléments de renforcement 3 sont placés de manière symétrique par rapport à un plan de symétrie du positionneur 9, afin de bien maîtriser les retraits de matière.

Le positionneur 9 a, en ses zones dépourvues des éléments de renfort 3, une épaisseur réduite au minimum, n'étant pas destiné à avoir de rôle structurel au niveau de ces zones.

De tels positionneurs 9 sont destinés à être utilisés comme structure de renforcement dans une pièce structurelle courbe. Cette pièce structurelle courbe est obtenue en plaçant, de façon simple et rapide, le positionneur dans un moule d'injection et/ou compression et en venant injecter une matière thermoplastique et/ou thermodurcissable qui complète et/ou renforce et finalise la forme de cette pièce structurelle courbe.

La figure 5 montre un positionneur 9 partiellement enrobé de résine 7.

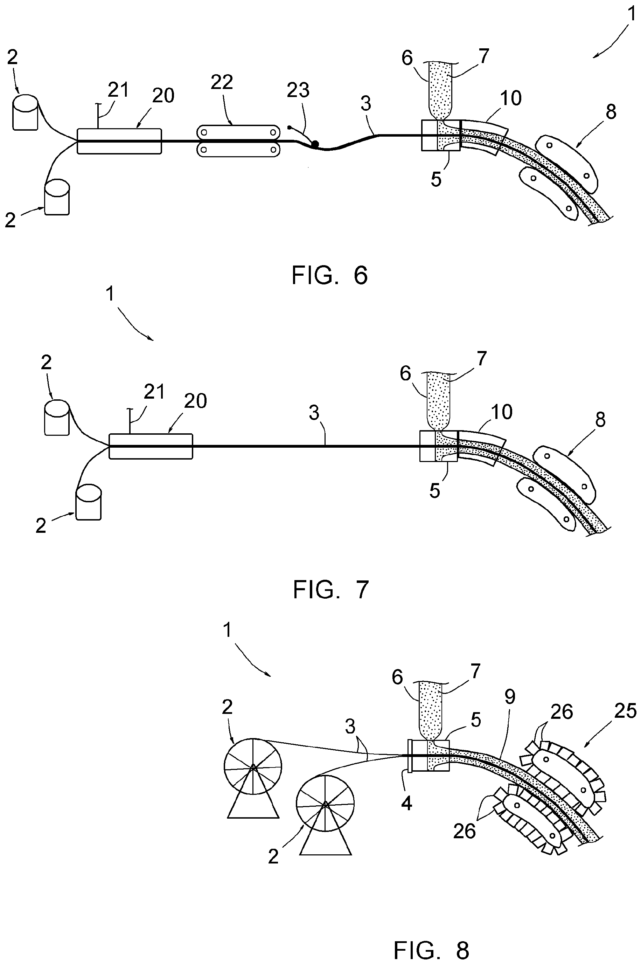

Les figures 6 et 7 représentent deux formes de réalisation du dispositif 1 dans lequel les éléments de renfort 3 sont produits en amont de l'unité d'extrusion ou de co-extrusion 5, au moyen d'une filière d'extrusion 20, alimentée en résine par un conduit 21. Le dispositif 1 selon la figure 6 comprend une unité de tirage rectiligne 22, un ensemble 23 de régulation de tension de chaque élément de renfort 3 (un seul est représenté), et les unités 5, 8 et 10 telles que précitées. Le dispositif 1 selon la figure 6 ne comprend pas d'unité de tirage rectiligne 22 ni d'ensemble 23 de régulation de tension : c'est l'unité de tirage 8 qui assure l'ensemble du mouvement des éléments 3.

La figure 8 montre encore une autre forme de réalisation du dispositif 8, dans laquelle une unité 25 à bandes sans fin motorisées courbes réalise non seulement un tirage du positionneur 9 obtenu mais également un calibrage courbe de celui-ci au moyen de blocs moulants 26 montés sur lesdites bandes. Ces blocs moulants 26 défilent, en succession les uns des autres, au contact du positionneur 9, réalisant ainsi le tirage et le calibrage courbe de celui-ci.

L'invention a été décrite ci-dessus en référence à une forme de réalisation donnée à titre d'exemple. Il va de soi qu'elle n'est pas limitée à cette forme de réalisation mais qu'elle s'étend à toutes les formes de réalisation couvertes par les revendications ci-annexées.

## Revendications

1. Procédé d'obtention d'une pièce profilée courbe (9) en matière composite et/ou synthétique, comprenant les étapes consistant à :
- alimenter des éléments de renfort (3) allongés dans une filière d'extrusion ou de co-extrusion (5), de manière indépendante d'un élément de renfort (3) à un autre, afin de permettre des vitesses linéaires d'alimentation différentes d'un élément de renfort (3) à un autre selon que l'élément se trouve du côté de l'intrados ou du côté de l'extrados de la filière (5),
- les éléments de renfort (3) étant des éléments continus obtenus par pultrusion, rectilignes à l'état non déformé, et/ou ayant une épaisseur telle que le ratio épaisseur sur rayon de courbure est compris entre 1/4000^{e} et 1/100^{e} ;
- alimenter en continu, dans la chambre d'injection et d'enrobage (5a) que comprend la filière d'extrusion ou de co-extrusion (5), une matière d'enrobage thermoplastique (7), chargée ou non en fibres, de telle sorte que cette matière vienne remplir cette chambre au fur et à mesure de l'extrusion ou de la coextrusion réalisée, et vienne ainsi noyer et enrober totalement ou partiellement les éléments de renfort (3) ;
- extruder ou coextruder cette matière d'enrobage (7) autour des éléments de renfort (3) ; et
- calibrer cette matière d'enrobage (7) autour des éléments de renfort (3) dans une unité de calibrage courbe (10), de manière à obtenir un profile courbe (9) dit "positionneur" assurant le positionnement fixe des éléments de renfort (3) les uns par rapport aux autres.

2. Procédé selon la revendication 1, **caractérisé en ce qu'**il comprend l'utilisation d'une filière d'extrusion ou de co-extrusion courbe.

3. Procédé selon la revendication 1, **caractérisé en ce qu'**il comprend l'utilisation d'une filière d'extrusion ou de co-extrusion droite.

4. Procédé selon l'une des revendications 1 à 3, **caractérisé en ce que** ladite unité de calibrage courbe est constituée par un outillage courbe directement positionné en aval de la filière de co-extrusion.

5. Procédé selon l'une des revendications 1 à 3, **caractérisé en ce qu'**il comprend une étape consistant à tirer le positionneur (9) par des moyens de tirage (8) qui sont courbes et assurent simultanément la fonction de calibrage.

6. Procédé selon l'une des revendications 1 à 5, **caractérisé en ce qu'**il comprend l'utilisation d'éléments de renfort (3) rectilignes à l'état non déformé, qui sont donc légèrement contraints en flexion lorsqu'ils sont noyés dans ladite matière d'enrobage (7).

7. Procédé selon la revendication 6, **caractérisé en ce que** les éléments de renfort ont une épaisseur comprise entre 1 et 4 mm.

8. Procédé selon l'une des revendications précédentes, selon lequel on insère les éléments de renfort avec un écartement entre eux inférieur à 5 fois l'épaisseur de ceux-ci, de préférence inférieur à 3 fois leur épaisseur, encore plus préférentiellement inférieur à 2 fois l'épaisseur.

9. Procédé selon l'une des revendications 6 à 8, **caractérisé en ce que** l'alimentation des éléments de renfort (3) se fait à partir de dérouleurs (2) sur lesquels ces éléments ont été préalablement enroulés.

10. Procédé selon l'une des revendications 1 à 9, **caractérisé en ce qu'**il comprend l'étape consistant à réaliser les éléments de renfort continus simultanément à l'étape d'extrusion ou de co-extrusion, par exemple par un procédé de pultrusion mis en œuvre en amont.

11. Procédé selon l'une des revendications 1 à 10, **caractérisé en ce que** l'alimentation des éléments de renfort (3) se fait au travers d'un système de guidage (4) de type plaque percée de trous ou lumières de défilement des éléments de renfort (3), permettant un positionnement de ces éléments de renfort (3) les uns par rapport aux autres à l'entrée, ou en amont de l'entrée, de la filière d'extrusion ou de co-extrusion (5).

12. Procédé selon l'une des revendications 1 à 11, **caractérisé en ce qu'**il comprend l'utilisation d'au moins un élément de renfort (3) gainé par un matériau ayant une forte capacité d'adhérence à la fois aux fibres et/ou à la résine de liaison de ces fibres que comprend l'élément de renfort (3), et à ladite matière d'enrobage (7).

13. Procédé selon l'une des revendications 1 à 12, **caractérisé en ce qu'**il comprend l'utilisation d'une matière d'enrobage contenant des fibres dont la longueur est supérieure à 0,5 mm, typiquement 5 mm, et préférentiellement supérieure à 10 mm.

14. Dispositif de mise en œuvre du procédé selon l'une des revendications 1 à 13, comprenant :
- une filière d'extrusion ou de co-extrusion (5), comprenant une chambre d'injection et d'enrobage (5a) ;
- une pluralité de moyens (2) d'alimentation desdits éléments de renfort (3) allongés dans ladite filière d'extrusion ou de co-extrusion (5), chaque moyen d'alimentation (2) étant propre à un élément de renfort (3) et permettant d'alimenter cet élément de renfort (3) de manière indépendante d'un élément de renfort (3) à un autre, lesdits moyens d'alimentation étant constitués par une ligne de pultrusion située en amont de la filière d'extrusion et permettant de produire et d'alimenter en continu les éléments de renforts (3) ;
- des moyens d'injection d'une matière d'enrobage (7) thermoplastique dans la chambre (5a) de la filière d'extrusion ou de co-extrusion (5), de telle sorte que cette matière vienne remplir cette chambre au fur et à mesure de l'extrusion ou de la coextrusion réalisée, et noyer totalement ou partiellement les éléments de renfort (3) ;
- une unité de calibrage courbe (10), dans laquelle ladite matière d'enrobage est calibrée, généralement par refroidissement, autour des éléments de renfort, de manière à obtenir un profile courbe dit "positionneur" assurant le positionnement fixe des éléments de renfort les uns par rapport aux autres.

## Patentansprüche

1. Zur Herstellung eines gekrümmten Formteils (9) aus Verbundwerkstoff oder Kunststoff dienendes Verfahren, das die folgenden Schritte umfasst:
- Zuführung von gereckten Verstärkungselementen (3) zu einer Extrusions- oder Koextrusionsform (5), in zwischen den einzelnen Verstärkungselementen (3) unabhängiger Weise, um lineare Zuführungsgeschwindigkeiten zu ermöglichen, die sich zwischen den einzelnen Verstärkungselementen (3) in Abhängigkeit davon unterscheiden, ob das Element an der Innen- oder an der Außenfläche der Form (5) angeordnet ist,
- wobei es sich bei den Verstärkungselementen (3) um durch Zieh-Strangpressen erhaltene, durchgehende Teile handelt, die in unverformtem Zustand geradlinig vorliegen und/oder eine Dicke aufweisen, deren Verhältnis zum Krümmungsradius zwischen 1/4000 und 1/100 beträgt;
- kontinuierliche Zuführung einer thermoplastischen Beschichtungsmasse (7), die faserverstärkt sein kann, zu der von der Extrusions- oder Koextrusionsform (5) umschlossenen Einspritz- und Beschichtungskammer (5a) dergestalt, dass diese Masse (7) im Laufe des Extrusions- oder Koextrusionsvorgangs diese Kammer (5a) nach und nach ausfüllt und dabei die Verstärkungselemente (3) vollständig oder teilweise einbettet und beschichtet;
- Extrusion bzw. Koextrusion dieser Beschichtungsmasse (7) im Umkreis der Verstärkungselemente (3); und
- Kalibrieren dieser Beschichtungsmasse (7) um die Verstärkungselemente (3) herum in einer gekrümmten Kalibriereinheit (10) dergestalt, dass dabei ein als "Positionierer" bezeichnetes gekrümmtes Formteil (9) erhalten wird, das für die unveränderliche Positionierung der Verstärkungselemente (3) untereinander sorgt.

2. Verfahren gemäß Anspruch 1, das **dadurch gekennzeichnet ist, dass** es die Verwendung einer gekrümmten Extrusions- oder Koextrusionsform beinhaltet.

3. Verfahren gemäß Anspruch 1, das **dadurch gekennzeichnet ist, dass** es die Verwendung einer geraden Extrusions- oder Koextrusionsform beinhaltet.

4. Verfahren gemäß einem der Ansprüche 1 bis 3, das **dadurch gekennzeichnet ist, dass** besagte gekrümmte Kalibriereinheit aus einem gekrümmten Werkzeug besteht, das der Koextrusionsform unmittelbar nachgelagert ist.

5. Verfahren gemäß einem der Ansprüche 1 bis 3, das **dadurch gekennzeichnet ist, dass** es einen Schritt beinhaltet, der im Ziehen des Positionierers (9) unter Verwendung von Zugmitteln (8) besteht, die gekrümmt sind und gleichzeitig die Kalibrierfunktion leisten.

6. Verfahren gemäß einem der Ansprüche 1 bis 5, das **dadurch gekennzeichnet ist, dass** es die Verwendung von in unverformtem Zustand geradlinigen Verstärkungselementen (3) beinhaltet, die somit beim Einbetten in besagter Beschichtungsmasse (7) eine leichte Biegespannung erfahren.

7. Verfahren gemäß Anspruch 6, das **dadurch gekennzeichnet ist, dass** die Verstärkungselemente eine Dicke zwischen 1 mm und 4 mm aufweisen.

8. Verfahren gemäß einem der vorangehenden Ansprüche, demzufolge die Verstärkungselemente in einem Abstand untereinander eingefügt werden, der weniger als dem fünffachen von deren Dicke, vorzugsweise weniger als dem dreifachen von deren Dicke und besser noch weniger als dem doppelten der Dicke entspricht.

9. Verfahren gemäß einem der Ansprüche 6 bis 8, das **dadurch gekennzeichnet ist, dass** die Zuführung der Verstärkungselemente (3) von Spulen (2) her erfolgt, auf die diese Elemente zuvor aufgewickelt worden sind.

10. Verfahren gemäß einem der Ansprüche 1 bis 9, das **dadurch gekennzeichnet ist, dass** es den Schritt beinhaltet, der darin besteht, dass die Herstellung der durchgehenden Verstärkungselemente zeitgleich mit dem Extrusions- bzw. Koextrusionsschritt erfolgt, beispielsweise nach einem vorgelagert eingerichteten Strangziehverfahren.

11. Verfahren gemäß einem der Ansprüche 1 bis 10, das **dadurch gekennzeichnet ist, dass** die Zuführung der Verstärkungselemente (3) durch ein mit Bohrungen oder Öffnungen versehenes Plattenführungssystem (4) hindurch erfolgt, das eine Positionierung dieser Verstärkungselemente (3) untereinander am Eintritt der Extrusions- oder Koextrusionsform (5) oder diesem vorgelagert gestattet.

12. Verfahren gemäß einem der Ansprüche 1 bis 11, das **dadurch gekennzeichnet ist, dass** es die Verwendung mindestens eines Verstärkungselements (3) beinhaltet, das von einem Werkstoff ummantelt ist, der ein starkes Adhäsionsvermögen sowohl den im Verstärkungselement enthaltenen Fasern und/oder dem Verbindungsharz dieser Fasern als auch besagter Beschichtungsmasse (7) gegenüber aufweist.

13. Verfahren gemäß einem der Ansprüche 1 bis 12, das **dadurch gekennzeichnet ist, dass** es die Verwendung einer Beschichtungsmasse beinhaltet, die Fasern enthält, deren Länge mehr als 0,5 mm, typischerweise 5 mm und vorzugsweise mehr als 10 mm beträgt.

14. Vorrichtung zur Umsetzung des Verfahrens gemäß einem der Ansprüche 1 bis 13, welche die folgenden Elemente einschließt:
- eine Extrusions- oder Koextrusionsform (5), die eine Einspritz- und Beschichtungskammer (5a) in sich birgt;
- verschiedenerlei Mittel (2) zur Zuführung besagter gereckter Verstärkungselemente (3) zu besagter Extrusions- oder Koextrusionsform (5), wobei jedes Zuführmittel (2) genau einem Verstärkungselement (3) zugehört und die Versorgung dieses Verstärkungselements (3) in von anderen Verstärkungselementen (3) unabhängiger Weise gestattet, wobei besagte Zuführmittel (2) von einer der Extrusionsform vorgelagerten Strangziehanlage dargestellt werden, mit der sich die Verstärkungselemente (3) kontinuierlich herstellen und zuführen lassen;
- Vorrichtungen zum Einspritzen einer thermoplastischen Beschichtungsmasse (7) in die Extrusions- oder Koextrusionsform (5) dergestalt, dass diese Masse diese Form entsprechend dem Fortschritt des Extrusions- oder Koextrusionsvorgangs nach und nach ausfüllt und die Verstärkungselemente (3) dabei vollständig oder teilweise einbettet;
- eine gekrümmte Kalibriereinheit (10), in dem besagte Beschichtungsmasse im Umkreis der Verstärkungselemente - im Allgemeinen durch Kühlung - so kalibriert wird, dass dabei ein als "Positionierer" bezeichnetes gekrümmtes Formteil (9) erhalten wird, das für die unveränderliche Positionierung der Verstärkungselemente untereinander sorgt.

## Claims

1. Process for obtaining a curved extruded part (9) made of composite and/or synthetic material comprising the steps consisting of:
- feeding elongated reinforcement elements (3) into an extrusion or coextrusion die (5) independently from one reinforcement element (3) to another, in order to enable different linear feeding speeds from one reinforcement element (3) to another depending on whether the element is on the top side or the bottom side of the die (5),
- the reinforcement elements (3) being continuous elements obtained by pultrusion, rectilinear in the non-deformed state, and/or having a thickness such that the thickness to curvature radius ratio is comprised between 1/4000^{th} and 1/100^{th};
- continuously feeding into the injection and coating chamber (5a) included in the extrusion or coextrusion die (5) a thermoplastic coating material (7), charged with fibres or not, in such a way that this material fills this chamber gradually as the extrusion or coextrusion is accomplished, and thus totally or partially embeds and coats the reinforcement elements (3);
- extrude or coextrude this coating material (7) around the reinforcement elements (3); and
- calibrate this coating material (7) around the reinforcement elements (3) in a curve calibration unit (10), in such a way as to obtain a so-called "positioner" curved profile (9) ensuring the fixed positioning of the reinforcement elements (3) with respect to each other.

2. Process as per claim 1, **characterised by** the fact it comprises the utilisation of a curved extrusion or coextrusion die.

3. Process as per claim 1, **characterised by** the fact it comprises the utilisation of a straight extrusion or coextrusion die.

4. Process as per one of the claims 1 to 3, **characterised by** the fact said curved calibration unit consists of a curved tool positioned directly downstream of the coextrusion die.

5. Process as per one of the claims 1 to 3, **characterised by** the fact it comprises a step consisting of pulling the positioner (9) by pulling means (8) which are curved and simultaneously ensure the calibration function.

6. Process as per one of the claims 1 to 5, **characterised by** the fact it comprises the utilisation of reinforcement elements (3) that are rectilinear in the non-deformed state, which are therefore subject to a slight bending force when they are embedded in said coating material (7).

7. Process as per claim 6, **characterised by** the fact that the reinforcement elements have a thickness comprised between 1 and 4 mm.

8. Process as per one of the previous claims whereby the reinforcement elements are inserted with a gap between each other of less than five times their thickness, preferably less than three times their thickness, and even more preferably less than twice their thickness.

9. Process as per one of the claims 6 to 8, **characterised by** the fact that the feeding of the reinforcement elements (3) is accomplished by reels (2) on which these elements have been wound beforehand.

10. Process as per one of the claims 1 to 9, **characterised by** the fact that it comprises the step consisting of making the continuous reinforcement elements simultaneously with the extrusion or coextrusion step, for example by a pultrusion process implemented upstream.

11. Process as per one of the claims 1 to 10, **characterised by** the fact that reinforcement elements (3) are fed through a guidance system (4) of the plate type drilled with holes or apertures through which the reinforcement elements (3) pass enabling the positioning of these reinforcement elements (3) with respect to each other at the input, or upstream of the input to the extrusion of coextrusion die (5).

12. Process as per one of the claims 1 to 11, **characterised by** the fact that it comprises the utilisation of at least one reinforcement element (3) sheathed with a material that has a great capability to adhere both to the fibres and/or the resin binding these fibres that comprises the reinforcement element (3), and to said coating material (7).

13. Process as per one of the claims 1 to 12, **characterised by** the fact that it comprises the utilisation of a coating material containing fibres whose length is greater than 0.5 mm, typically 5 mm, and preferably greater than 10 mm.

14. Device for implementing the process as per one of the claims 1 to 13, comprising:
- an extrusion or coextrusion die (5), comprising an injection and coating chamber (5a);
- a number of means (2) for feeding said elongated reinforcement elements (3) in said extrusion or coextrusion (5), each means of feeding (2) being specific to one reinforcement element (3) and making it possible to feed this reinforcement element (3) independently from one reinforcement element (3) to another, said means of feeding consisting of a pultrusion line situated upstream of the extrusion die and making it possible to continuously produce and feed the reinforcement elements (3);
- means for injecting a thermoplastic coating material (7) into the chamber (5a) of the extrusion or coextrusion die (5) in such a way that this material fills this chamber gradually as the extrusion or coextrusion is accomplished and totally or partially embeds the reinforcement elements (3);
- a curve calibration unit (10) in which said coating material is calibrated, generally by cooling, around the reinforcement elements in such a way as to obtain a so-called "positioner" curved profile ensuring the fixed positioning of the reinforcement elements with respect to each other.
